# EUROPEAN PATENT APPLICATION

(11) **EP 4 703 827 A1**
(43) Date of publication of application: **04.03.2026**
(21) Application number: 25192084.9
(22) Date of filing: 28.07.2025
(51) Int. Cl.: G05B 23/02, G06N 20/00

(54) **REPORT GENERATION SYSTEM, REPORT GENERATION METHOD, AND PROGRAM**

(30) Priority: 30.08.2024 JP 2024148262
(71) Applicant: Toyo Engineering Corporation, Chiba-shi, Chiba 261-8601 (JP)
(72) Inventor: SASAKI, Keigo, Chiba, 261-8601 (JP)
(74) Representative: Reich, Jochen

(57) **Abstract**

A processing system includes sensors that monitor its operating status. Each of multiple measurement data items corresponding to measurement values collected by the sensors is assigned a tag unique to the sensor that collects the measurement data item. The report generation system includes a processor configured to identify, as an abnormality tag, a tag for a measurement data item that indicated abnormal behavior during a report target period among the measurement data items, generate a prompt including a report target data item and an instruction to generate a description of a behavior reflected in the report target data item, the report target data item corresponding to a measurement data item acquired during the report target period and assigned a tag matching the abnormality tag, acquire the description from the large language model by inputting the prompt into the large language model, and generate the report using the description.

## Description

### BACKGROUND

### 1. Field

The present disclosure relates to a report generation system, a report generation method, and a program.

### 2. Description of Related Art

In processing systems provided in facilities such as chemical plants and factory manufacturing lines, sensors are installed on various devices and on piping or the like that connects these devices to monitor the operating status of each processing system. For example, JP2024-36041A discloses a technique of determining whether a measurement data item from each sensor represents an abnormal value and notifying the administrator responsible for the processing system of the determination result, thereby supporting management of the operating status of the processing system.

Using a large language model to generate a text related to operating status has been considered as an approach for notifying the administrator responsible for the processing system of the information related to the operating status. For example, generating a text describing the behavior reflected in a measurement data item using a large language model enables more specific notification regarding the operating status of the processing system.

In the processing system, hundreds or thousands types of measurement data items are acquired. Simply inputting all of these measurement data items into a large language model to generate a text related to the operating status of the processing system will increase the computational load on the large language model.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A report generation system according to an aspect of the present disclosure generates a report on an operating status of a processing system via a large language model. The processing system includes sensors that monitor the operating status. Each of multiple measurement data items corresponding to measurement values collected by the sensors is assigned a tag unique to the sensor that collects the measurement data item. The report generation system includes a processor configured to identify, as an abnormality tag, a tag for a measurement data item that indicated abnormal behavior during a report target period among the measurement data items, generate a prompt including a report target data item and an instruction to generate a description of a behavior reflected in the report target data item, the report target data item corresponding to a measurement data item acquired during the report target period and assigned a tag matching the abnormality tag, acquire the description from the large language model by inputting the prompt into the large language model, and generate the report using the description.

A report generation method according to an aspect of the present disclosure generates a report on an operating status of a processing system via a large language model using a report generation system that includes a processor. The processing system includes sensors that monitor the operating status. Each of multiple measurement data items corresponding to measurement values collected by the sensors is assigned a tag unique to the sensor that collects the measurement data item. The report generation method includes identifying, by the processor, as an abnormality tag, a tag for a measurement data item that indicated abnormal behavior during a report target period among the measurement data items, generating, by the processor, a prompt including a report target data item and an instruction to generate a description of a behavior reflected in the report target data item, the report target data item corresponding to a measurement data item acquired during the report target period and assigned a tag matching the abnormality tag, acquiring, by the processor, the description from the large language model by inputting the prompt into the large language model, and generating, by the processor, the report using the description.

A program according to a further aspect of the present disclosure is executed by a processor included in a report generation system. The program causes the processor to execute the above-described report generation method.

Other features and aspects will be apparent from the following detailed description, the drawings, and the claims.

### BRIEF DESCRIPTION OF THE DRAWINGS

Fig. 1 is a schematic diagram illustrating an overall configuration of a report generation system.
Fig. 2 is a schematic diagram illustrating a hardware configuration of the report generation server included in the report generation system of Fig. 1.
Fig. 3 is a block diagram illustrating the configuration of the report generation server shown in Fig. 2.
Fig. 4 is a flowchart illustrating a report generation process executed by the report generation server of Fig. 2.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

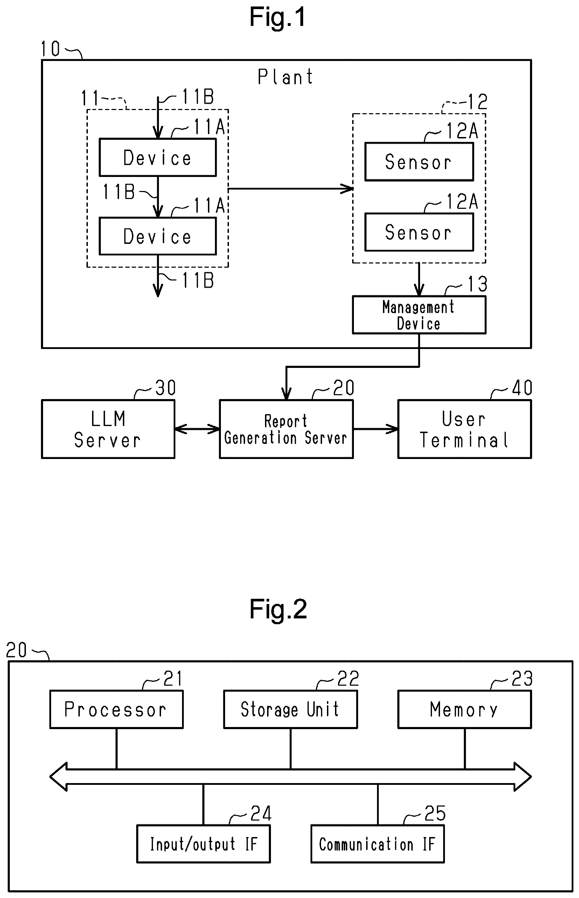

An embodiment of a report generation system, a report generation method, and a program will now be described with reference to Figs. 1 to 4. The report generation system of the present embodiment is a computer system that notifies the administrator responsible for a processing system of its operating status. The processing system is installed in, for example, a chemical plant or a factory manufacturing line.

### Overall Configuration

As shown in Fig. 1, the report generation system of the present embodiment includes a report generation server 20. The report generation server 20 outputs a report for notifying the administrator responsible for a processing system 11, which is included in a plant 10, of the operating status of the processing system 11. The report generation server 20 uses a large language model (LLM) included in a LLM server 30 to generate a report on the operating status of the processing system 11. Further, the report generation server 20 outputs the generated report to a user terminal 40.

The plant 10 may be any facility including the processing system 11, such as a chemical plant or a factory manufacturing line.

The processing system 11 is at least a portion of the plant 10. For example, the processing system 11 has a configuration in which devices 11A are connected to each other by pipes 11B. Each device 11A is, for example, a processing device that executes some processes on a processing target or another device 11A. Examples of the device 11A include a tank that temporarily stores, for example, a processing target or other raw materials. Examples of the device 11A also include, but are not limited to, at least one of a pump, a compressor, a turbine, a heat exchanger, a distillation column, a reaction vessel, a dryer, a heating furnace, a fan, and a valve. The device 11A includes a control terminal that controls processes. Examples of the control terminal include, but are not limited to, at least one of an electromagnetic valve (solenoid valve), a positioner, a motor of a motor pump, and a relay switch that is connected to an opening/closing control device that controls the operation of an electric heater.

The plant 10 includes a sensor group 12 provided in the processing system 11. The sensor group 12 includes components including sensors 12A that monitor the operating status of the processing system 11. The sensors 12A each detect a physical quantity indicating the state of a facility such as the corresponding device 11A or pipe 11B. The sensor 12A is preferably provided in each of the devices 11A and each of the pipes 11B, but may be provided in any measurement target of the devices 11A and the pipes 11B. Examples of the sensor 12A include, but are not limited to, a flow meter, a level gauge, a thermometer, a pressure gauge, a vibration sensor, an analyzer, an ammeter, a voltmeter, a speedometer, or a sensor that detects a valve opening degree. The sensor 12A may be any device configured to measure a physical quantity.

The plant 10 includes a management device 13. The management device 13 is, for example, a data server. Instead, the management device 13 may be, for example, a computer terminal used by an administrator or the like responsible for the plant 10. The management device 13 stores a measurement data item collected by each sensor 12A of the sensor group 12. The management device 13 accumulates the measurement data items from the past to the present by repeatedly storing the measurement data item corresponding to the measurement value collected by each sensor 12A at predetermined time intervals.

For example, the management device 13 may store, as a measurement data item, the measurement value collected by each sensor 12A. For example, the management device 13 may store, as a measurement data item, a value obtained by executing a calculation process on the measurement value collected by each sensor 12A. For example, a measurement data item may be a value representing the ratio of the measurement value to a design value (theoretical value) of the physical quantity measured by the sensor 12A. For example, a measurement data item may be a value calculated using two or more measurement values, such as a pressure difference indicating the difference between measurement values collected by two pressure gauges.

The measurement data item stored in the management device 13 is assigned a tag unique to the sensor 12A that collects that measurement data item. The tag is a character string composed of, for example, letters, numbers, symbols, or a combination thereof. That is, each measurement data item is assigned, as a tag, a character string unique to the sensor 12A that collects the measurement data item. For example, the same tag is assigned to multiple measurement data items collected by the same sensor 12A at different points in time. In addition, each measurement data item is assigned a time stamp from which the measurement date and time is identifiable.

The tag includes, for example, information enabling identification of the plant 10 for which a measurement data item has been collected, information enabling identification of the facility targeted for measurement, and information enabling identification of the sensor 12A that has collected the measurement data item. The tag may include, for example, information enabling identification of a physical quantity represented by the value of a measurement data item.

The report generation server 20 is, for example, managed by a corporate entity different from the corporate entity that manages the processing system 11, but may also be managed by the corporate entity that manages the processing system 11. A corporate entity is composed of a single company or a group of companies that are economically and organizationally linked. The report generation server 20 is connected to each of the management device 13 of the plant 10, the LLM server 30, and the user terminal 40 via a network line for mutual communication. The report generation server 20 collects a measurement data item from the management device 13 of the plant 10. The report generation server 20 causes the large language model included in the LLM server 30 to generate a description of a measurement data item that indicated abnormal behavior. The report generation server 20 outputs, to the user terminal 40, a report using the description acquired from the large language model. The report that is output by the report generation server 20 may be transmitted to the user terminal 40 via, for example, another server.

The LLM server 30 is, for example, managed by a corporate entity different from the corporate entity that manages the report generation server 20, but may also be managed by the corporate entity that manages the report generation server 20. The large language model included in the LLM server 30 is trained on a large-scale text corpus. The large language model is used to perform natural language understanding tasks. The large language model functions to interpret a sentence given as a prompt and generate an appropriate response in that context.

The user terminal 40 is, for example, a computer terminal managed by a user such as an employee of the corporate entity that manages the plant 10. The user terminal 40 is, for example, a desktop or a laptop personal computer, but may also be a portable terminal such as a tablet or a smartphone compatible with a mobile communication system. An application program and a webpage browser for displaying the report transmitted from the report generation server 20 are installed in the user terminal 40. While Fig. 1 illustrates a configuration in which the user terminal 40 is disposed outside the plant 10, the user terminal 40 may be a computer terminal disposed inside the plant 10.

For example, the report generated by the report generation server 20 may be in the form of an electronic mail containing text data. In this case, the report generation server 20 transmits a report in the form of an electronic mail to a predetermined mail server. The user terminal 40 acquires a report in the form of an electronic mail from the mail server. The report generated by the report generation server 20 may be in the form of an image displayed by an application program or a webpage browser.

### Hardware Configuration

An example of the hardware configuration of the report generation server 20 will now be described with reference to Fig. 2. The hardware configuration of the report generation server 20 is not limited to the following example and may be implemented differently. The management device 13 and the user terminal 40 may have the same configuration as the following hardware configuration.

As illustrated in Fig. 2, the report generation server 20 includes a processor 21, a storage unit 22, a memory 23, an input/output IF 24, and a communication IF 25.

The processor 21 is hardware for executing an instruction set described in a program. The processor 21 includes, for example, an arithmetic device, a register, and a peripheral circuit.

The storage unit 22 provides storage for data. The storage unit 22 is, for example, a flash memory or a hard disk drive (HDD). The memory 23 temporarily stores, for example, a program and data that are processed by the program. The memory 23 is, for example, a volatile memory such as a dynamic random-access memory (DRAM).

The input/output IF 24 is an interface that includes an input device that receives an operation input from the administrator responsible for the report generation server 20 and an output device that presents information to the administrator. The input device is, for example, a pointing device (e.g., a mouse) or a keyboard. The input device may be a microphone for voice input. The output device is, for example, a display panel such as a liquid crystal display panel or an organic EL panel. The input/output IF 24 may be, for example, a touch panel in which a display panel serving as a display that displays an image is combined with a touchpad serving as an input unit that receives a user's operation. The communication IF 25 is an interface that inputs and outputs a signal for communication with an external device.

### Processor 21

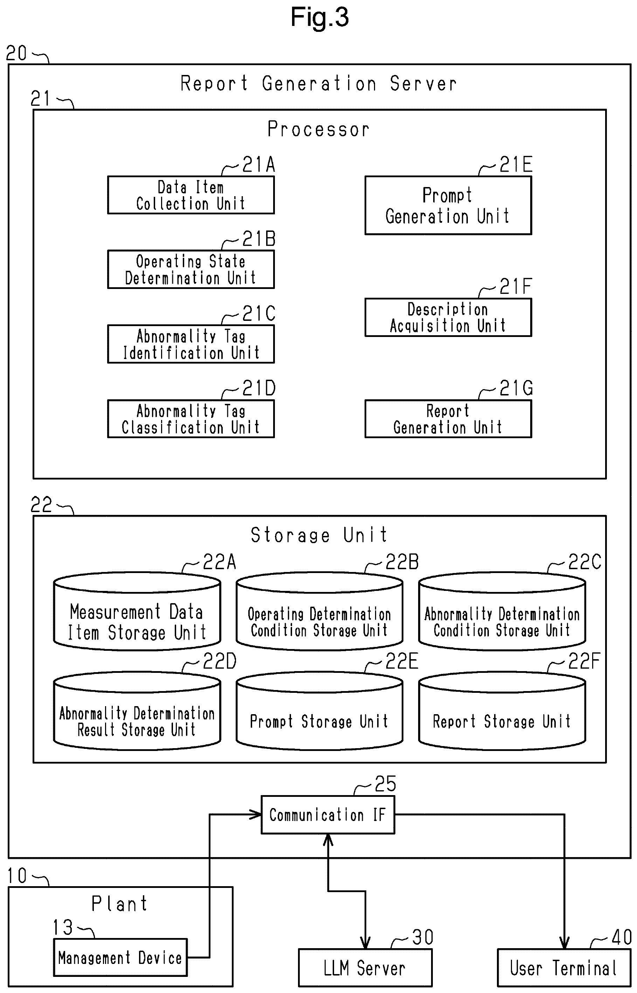

Referring to Fig. 3, the processor 21 of the report generation server 20 executes a report generation process. The report generation process generates a report that indicates the operating status of the processing system 11 within a predetermined report target period. The report target period may be, for example, several hours, half a day, one day, or several days. The report generation process is repeatedly executed for each report target period.

The processor 21 executes a program for the report generation process to function as, for example, a data item collection unit 21A, an operating state determination unit 21B, an abnormality tag identification unit 21C, an abnormality tag classification unit 21D, a prompt generation unit 21E, a description acquisition unit 21F, and a report generation unit 21G. The program for the report generation process is stored in the storage unit 22 of the report generation server 20.

The data item collection unit 21A executes a measurement data item collection process that collects a measurement data item from the management device 13 of the plant 10. The data item collection unit 21A stores, in the storage unit 22, the measurement data item collected from the management device 13. The process in which the data item collection unit 21A collects a measurement data item from the management device 13 is executed for each predetermined period (e.g., every few hours, every half a day, or every day). In this case, the data item collection unit 21A collects the measurement data item stored in the management device 13 during the period between the previous collection and the subsequent collection of the measurement data item from the management device 13. The process in which the data item collection unit 21A collects a measurement data item from the management device 13 may be a process that transmits a measurement data item from the management device 13 to the report generation server 20 for each predetermined period.

The operating state determination unit 21B executes an operating state determination process that determines whether the processing system 11 is in an operating state or a non-operating state during the report target period, based on at least one measurement data item collected during the report target period and assigned a specific tag. For example, the operating state determination unit 21B determines that the processing system 11 is in the non-operating state when at least one of the measurement data item indicating the flow rate of a first raw material and the measurement data item indicating the flow rate of a second raw material is less than a threshold.

In the report generation process, when the processing system 11 is in the operating state during the report target period, a process that outputs a first report describing the behavior reflected in the measurement data item collected during the report target period is executed. In the process that outputs the first report, a process that causes the large language model to generate a description of the behavior reflected in the measurement data item collected during the report target period is executed. When the processing system 11 is in the non-operating state during the report target period, a process that outputs a second report including information reporting that the processing system 11 is in the non-operating state is executed, instead of the process that outputs the first report using the large language model.

The abnormality tag identification unit 21C executes an abnormality tag identification process that identifies, as an abnormality tag, the tag for the measurement data item that indicated abnormal behavior during the report target period. For example, the abnormality tag identification unit 21C determines whether each of multiple measurement data items collected during the report target period indicated abnormal behavior, based on whether each measurement data item is greater than a predetermined threshold. This allows the abnormality tag identification unit 21C to regard, as a measurement data item that indicated abnormal behavior, a measurement data item that exceeded the predetermined threshold among the measurement data items collected during the report target period. This also allows the abnormality tag identification unit 21C to regard, as a measurement data item that indicated normal behavior, a measurement data item that did not exceed the predetermined threshold among the measurement data items collected during the report target period. The abnormality tag identification unit 21C identifies, as an abnormality tag, the tag corresponding to the measurement data item that indicated the abnormal behavior. The storage unit 22 stores the threshold used to make a determination by the abnormality tag identification unit 21C.

When there are multiple measurement data items collected at different points in time during the report target period and assigned the same tag, the abnormality tag identification unit 21C may determine whether the statistical values of the measurement data items are greater than a predetermined threshold. The statistical value refers to, for example, one of a minimum value, a maximum value, a median, a mode, or a mean. In this case, when the statistical values of measurement data items collected at different points in time during the report target period and assigned the same tag exceed the predetermined threshold, the abnormality tag identification unit 21C identifies the tags corresponding to the statistical values as abnormality tags.

Alternatively, the abnormality tag identification unit 21C may execute, for each of multiple measurement data items collected at different points in time during the report target period and assigned the same tag, the determination process using a threshold. In this case, when the number of measurement data items greater than the threshold among the multiple measurement data items exceeds a predetermined ratio or when there are one or more measurement data items exceeding the threshold, the tags corresponding to the measurement data items are identified as abnormality tags.

The abnormality tag identification unit 21C may determine whether a measurement data item indicated abnormal behavior, based on an abnormality degree that quantifies the extent of abnormality in the measurement data item. When calculating the abnormality degree, the abnormality tag identification unit 21C acquires, for each tag in advance, for example, a reference value (e.g., a mean) and a reference deviation (e.g., a standard deviation) indicating the degree of deviation of the measurement data item from the reference value, from the measurement data items obtained in a period during which the processing system 11 normally operates. Then, the abnormality tag identification unit 21C obtains the difference of the measurement data item acquired in the report target period from the reference value, and calculates the value acquired by dividing the difference by the reference deviation as the abnormality degree. When the abnormality degree is a positive value, the value of the measurement data item is larger than the reference value. When the abnormality degree is a negative value, the value of the measurement data item is smaller than the reference value. The greater the absolute value of the abnormality degree, the greater the abnormality degree.

For example, when the absolute value of the abnormality degree of the measurement data item collected during the report target period exceeds a predetermined threshold, the abnormality tag identification unit 21C is configured to regard the measurement data item as indicating abnormal behavior. When there are measurement data items collected at different points in time during the report target period and assigned the same tag, the abnormality tag identification unit 21C may compare the statistical values of the abnormality degrees of the measurement data items with the predetermined threshold. Alternatively, the abnormality tag identification unit 21C may compare the threshold with each of the measurement data items collected at different points in time during the report target period and assigned the same tag. In this case, when the number of measurement data items exceeding the abnormality degree among the multiple measurement data items exceeds a predetermined ratio or when there are one or more measurement data items exceeding the abnormality degree, the tags corresponding to the measurement data items are identified as abnormality tags.

The abnormality degree may be calculated by a computer other than the abnormality tag identification unit 21C. For example, the abnormality degree may be calculated by the management device 13, and the management device 13 may store the abnormality degree. In this case, the data item collection unit 21A may collect the abnormality degree together with a measurement data item from the management device 13.

The abnormality tag classification unit 21D executes an abnormality tag classification process that classifies tags matching abnormality tags into a new abnormality tag and a continuous abnormality tag according to the behavior reflected in the measurement data item collected during a reference period, which precedes the report target period. The reference period precedes the report target period and is continuous with the report target period. The reference period may have the same length as the report target period, may be longer than the report target period, or may be shorter than the report target period.

For example, from the tags matching the abnormality tags, the abnormality tag classification unit 21D identifies, as a new abnormality tag, the tag for the measurement data item that indicated normal behavior during the reference period. That is, the tag for the measurement data item that indicated the normal behavior during the reference period and indicated the abnormal behavior during the report target period is identified as a new abnormality tag. From the tags matching the abnormality tags, the abnormality tag classification unit 21D identifies, as a continuous abnormality tag, the tag for the measurement data item that indicated abnormal behavior during the reference period. That is, the tag for the measurement data item that indicated abnormal behavior during the reference period and also indicated abnormal behavior during the report target period is identified as a continuous abnormality tag.

In the same manner as the process in which the abnormality tag identification unit 21C identifies the tag for the measurement data item that indicated abnormal behavior during the report target period, the abnormality tag classification unit 21D may determine whether the behavior reflected in the measurement data item collected during the reference period is normal or abnormal. In this case, the abnormality tag classification unit 21D may determine whether the behavior reflected in the measurement data item assigned the tag matching the abnormality tag is normal or abnormal from the measurement data items collected during the reference period.

The prompt generation unit 21E executes a prompt generation process that generates a prompt to be input into the large language model of the LLM server 30. The prompt to be input into the large language model includes a report target data item matching a measurement data item collected during the report target period and assigned a tag corresponding to a new abnormality tag, and includes an instruction to generate a description of the behavior reflected in the report target data item.

The report target data item may include one or more measurement data items collected during the report target period and assigned a tag matching a new abnormality tag. The report target data item may further include a report target statistical value related to measurement data items collected at different points in time during the report target period and assigned the same tag matching a new abnormality tag. This reduces the number of characters included in the prompt, thereby reducing the computational load on the large language model.

The prompt generation unit 21E may generate a prompt for each tag matching a new abnormality tag. The prompt generation unit 21E may contain, in one prompt, report target data items corresponding to different new abnormality tags.

In one report generation process, an upper limit may be set for the number of tags for report target data items to be included in a prompt. In this case, priorities are assigned to the tags matching a new abnormality tag so as to select the tag for the report target data item to be included in the prompt. The tag priority may be set in advance for each tag, or may be assigned such that tags with higher abnormality degrees are given higher priority.

In addition to the report target data item, the prompt generation unit 21E may add, to a prompt, a reference data item corresponding to a measurement data item collected during the reference period and assigned a tag matching a new abnormality tag. The reference data item may include one or more measurement data items collected during the reference period and assigned a tag matching a new abnormality tag. The reference data item may include reference statistical values related to measurement data items collected at different points in time during the reference period and assigned the same tag matching a new abnormality tag.

Such a configuration produces a description comparing the measurement data item collected during the reference period and the measurement data item collected during the report target period. When the reference statistical value is added to a prompt, the number of characters contained in the prompt is reduced as compared to when the measurement data items collected during the reference period are added to the prompt. This reduces the computational load on the large language model.

The report target statistical value is preferably calculated from a smaller number of measurement data items than that of the measurement data items assigned the same tag as the report target statistical value and used to calculate the reference statistical value. For example, there may be a case in which a measurement data item for a tag is recorded every hour in the plant 10. In this case, for example, if the reference statistical value is calculated every twelve hours, that is, calculated from measurement data items based on twelve measurements, the report target statistical value is preferably a statistical value calculated in a shorter span such as every six hours, that is, a statistical value corresponding to measurement data items based on six measurements.

Calculating a reference statistical value from a relatively large number of measurement data items suitably reduces the number of characters included in a prompt, while enabling comparison with previous measurement data items. Calculating a report target statistical value from a relatively small number of measurement data items reduces the number of characters included in a prompt, while preventing the behavior reflected in the measurement data item collected during the report target period from becoming difficult to observe.

In the same manner, when a reference statistical value is calculated using a relatively old measurement data item, the reference statistical value is preferably calculated from a larger number of data items as compared to when the reference statistical value using a relatively new measurement data item is calculated. The older the measurement data item with reference to the report target period, the lower the importance in describing the behavior reflected in the measurement data item collected during the report target period. Thus, such a statistical value calculation method reduces the calculation load on the large language model without reducing the accuracy of the answer from the large language model.

In addition to the report target data item, the prompt generation unit 21E may add, to a prompt, the data on an abnormality degree corresponding to the report target data item. In this case, a text that describes a method for interpreting the data on the abnormality degree is preferably included in the prompt together with the definition sentence of the abnormality degree. Examples of texts that describe how to interpret the abnormality degree include the following: "If the abnormality degree is positive, the measurement data item is larger than normal." "If the abnormality degree is negative, the measurement data item is smaller than normal." "The greater the absolute value of the abnormality degree, the more significant the abnormality." Adding such content to the prompt allows the large language model to readily interpret the abnormal degree included in the prompt.

The prompt generation unit 21E may execute a process that reduces the number of digits of a numerical value included in a report target data item. The process that reduces the number of digits of a numerical value included in the report target data item is a process such as rounding, ceiling, or flooring a numerical value included in the report target data item to a specified number of digits. This reduces the number of characters included in the prompt.

The description acquisition unit 21F inputs a prompt generated by the prompt generation unit 21E into the large language model of the LLM server 30, thereby executing a description acquisition process that acquires a description of the behavior reflected in a report target data item from the large language model. Further, the description acquisition unit 21F may use the large language model to process the description acquired from the large language model. For example, when descriptions are acquired from the large language model, the description acquisition unit 21F may input a prompt including the descriptions and an instruction to summarize the descriptions into the large language model to output a summary of the descriptions.

The report generation unit 21G generates a report on the operating status of the processing system 11. The report generation unit 21G transmits the generated report to the user terminal 40. The report generation unit 21G may transmit the generated report to the user terminal 40 via, for instance, another server (e.g., an email server).

For example, when the operating state determination unit 21B determines that the processing system 11 is in the operating state, the report generation unit 21G executes a first report generation process that generates a first report based on the description of a report target data item acquired from the large language model. The first report includes, for example, text data containing at least part of the description acquired from the large language model. The first report includes, for example, text data containing at least part of the description acquired from the large language model and processed using the large language model.

For example, when the operating state determination unit 21B determines that the processing system 11 is in the non-operating state, the report generation unit 21G executes a second report generation process that generates a second report. The second report includes information reporting that the processing system 11 is in the non-operating state. When the operating state determination unit 21B determines that the processing system 11 is in the non-operating state, the processes executed by the abnormality tag identification unit 21C, the abnormality tag classification unit 21D, the prompt generation unit 21E, and the description acquisition unit 21F may be omitted.

### Storage Unit 22

As shown in Fig. 3, the storage unit 22 includes a database including a measurement data item storage unit 22A, an operating determination condition storage unit 22B, an abnormality determination condition storage unit 22C, an abnormality determination result storage unit 22D, a prompt storage unit 22E, and a report storage unit 22F.

The measurement data item storage unit 22A stores the measurement data item acquired by the data item collection unit 21A from the management device 13 of the plant 10. For example, in addition to the measurement data item, the measurement data item storage unit 22A may store a tag assigned to the measurement data item, the abnormality degree corresponding to the measurement data item, and the measurement date and time of the measurement data item in association with each other.

The operating determination condition storage unit 22B stores, for each tag, an operating determination condition (e.g., a threshold for a measurement data item assigned a specific tag) for determining whether the processing system 11 is in the operating state or in the non-operating state in the process executed by the operating state determination unit 21B.

The abnormality determination condition storage unit 22C stores, for each tag, an abnormality determination condition (e.g., a threshold for the measurement data item and a threshold for the abnormality degree) for determining whether the measurement data item indicated abnormal behavior. The determination condition (e.g., the threshold for the measurement data item and the threshold for the abnormality degree) stored in the abnormality determination condition storage unit 22C is used for the process executed by the abnormality tag identification unit 21C and the process executed by the abnormality tag classification unit 21D.

The abnormality determination result storage unit 22D stores the determination result obtained by the abnormality tag identification unit 21C. That is, the abnormality determination result storage unit 22D stores a tag determined to be abnormal in each report target period.

The prompt storage unit 22E stores templates of prompts to be input into the large language model. The prompt storage unit 22E stores text data necessary for the prompt generation unit 21E to generate a prompt. Examples of the text data stored in the prompt storage unit 22E include an instruction sentence for generating a description of the report target data item, a definition sentence of the abnormality degree, and a text describing how to interpret the data on the abnormality degree. The prompt storage unit 22E may store prompts that have previously been generated by the prompt generation unit 21E.

The report storage unit 22F stores templates of the first report and the second report generated by the report generation unit 21G. The report storage unit 22F stores text data necessary for the report generation unit 21G to generate the first report and the second report. The report storage unit 22F may store the first report and the second report that have previously been generated by the report generation unit 21G.

### Report Generation Process

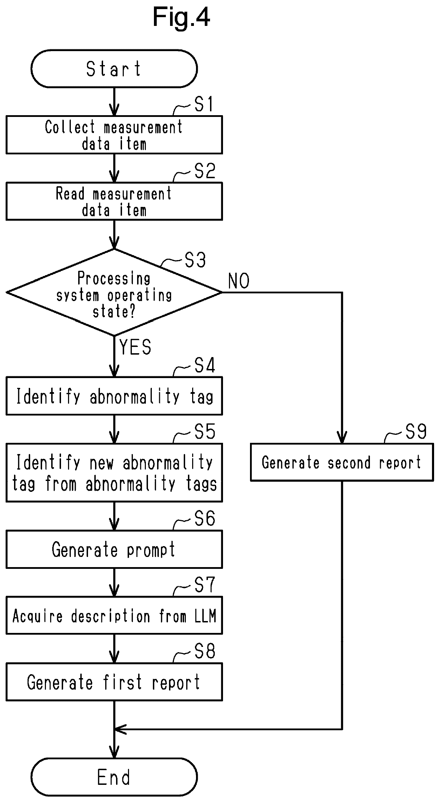

The report generation process will now be described with reference to Fig. 4. The following report generation process is repeatedly executed for each predetermined report target period. In the following description, new measurement data items are stored in the management device 13 during the report target period.

As illustrated in Fig. 4, in the report generation process, first, the data item collection unit 21A collects the measurement data item stored in the management device 13 from the management device 13 of the plant 10 (step S1). The data item collection unit 21A acquires, from the management device 13, the measurement data item obtained at a point in time later than when the measurement data item was most recently collected from the management device 13, and stores the collected measurement data item in the measurement data item storage unit 22A. The process of step S1 may be executed separately from the report generation process. For example, the process of step S1 may be repeatedly executed during a period that is shorter than the report target period.

Next, the processor 21 reads the measurement data item stored in the measurement data item storage unit 22A (step S2). In step S2, the processor 21 reads at least the measurement data item collected during the report target period from the measurement data items stored in the measurement data item storage unit 22A. In step S2, in addition to the measurement data item collected during the report target period, the processor 21 may read the measurement data item collected during the reference period from the measurement data items stored in the measurement data item storage unit 22A.

Then, the operating state determination unit 21B determines whether the processing system 11 was in the operating state or in the non-operating state during the report target period, based on one or more measurement data items collected during the report target period and assigned a specific tag (step S3). In step S3, the operating state determination unit 21B makes the determination using the operation determination condition stored in the operating determination condition storage unit 22B.

In step S3, when it is determined that the processing system 11 was in the operating state during the report target period (step S3: YES), the abnormality tag identification unit 21C identifies, as an abnormality tag, the tag for the measurement data item that indicated abnormal behavior during the report target period (step S4). In step S4, the abnormality tag identification unit 21C identifies the abnormality tag using the abnormality determination condition stored in the abnormality determination condition storage unit 22C.

Subsequently, the abnormality tag classification unit 21D classifies tags matching abnormality tags into a new abnormality tag and a continuous abnormality tag according to the behavior reflected in the measurement data item collected during the report target period (step S5). In other words, in step S5, the abnormality tag classification unit 21D identifies a new abnormality tag from the tags that match the abnormality tags according to the behavior reflected in the measurement data item collected during the reference period.

In an example of the process of step S5, first, the abnormality tag classification unit 21D reads, from the measurement data item storage unit 22A, the measurement data item assigned the tag matching the abnormality tag among the measurement data items collected during the reference period. Then, the abnormality tag classification unit 21D determines whether the measurement data item has a new abnormality tag or a continuous abnormality tag by executing the same process on the read measurement data item as the process executed by the abnormality tag identification unit 21C in step S4.

Next, the prompt generation unit 21E generates a prompt including the report target data item corresponding to the measurement data item collected during the report target period and assigned the tag matching the new abnormality tag and including an instruction to generate a description of the report target data item (step S6). In step S6, the prompt generation unit 21E generates a prompt by reading, from the prompt storage unit 22E, a template of a prompt including the instruction to generate the description of the report target data item and inserting the report target data item into a predetermined position of the template.

Then, the description acquisition unit 21F inputs the prompt generated by the prompt generation unit 21E into the large language model of the LLM server 30, thereby acquiring a description of the behavior reflected in the report target data item from the large language model (step S7).

The description of the behavior reflected in the report target data item may be a text describing a temporal change in any one of the measurement data item collected during the report target period, the statistical value thereof, the abnormality degree, and the statistical value thereof. The description of the behavior reflected in the report target data item may be a text describing a temporal change in any one of the measurement data item collected during the reference period through the report target period, the statistical value thereof, the abnormality degree, and the statistical value thereof. The description of the behavior reflected in the report target data item may be a text describing the time at which any one of the measurement data item, the statistical value thereof, the abnormality degree, and the statistical value thereof exceeded a predetermined threshold during the report target period. In this case, the prompt may include a threshold for any one of the measurement data item, the statistical value thereof, the abnormality degree, and the statistical value thereof.

Next, the report generation unit 21G generates a first report based on the description of the behavior reflected in the report target data item acquired from the large language model (step S8). For example, in step S8, the report generation unit 21G generates the first report by reading a template of the first report from the report storage unit 22F and inserting, into a predetermined position of the template, the description of the report target data item acquired from the large language model.

In step S8, the report generation unit 21G may output, to the first report, information reporting that the measurement data item assigned the tag matching the continuous abnormality tag has continuously indicated abnormal behavior from the reference period to the report target period. Then, the report generation unit 21G transmits the generated first report to the user terminal 40. Through the above-described processes, the report generation process is completed.

In step S3, when it is determined that the processing system 11 was in the non-operating state during the report target period (step S3: NO), the report generation unit 21G generates a second report including information reporting that the processing system 11 is in the non-operating state (step S9). For example, in step S9, the report generation unit 21G reads, from the report storage unit 22F, a second report including a text reporting that the processing system 11 is in the non-operating state, and transmits the second report to the user terminals 40. Through the above-described processes, the report generation process is completed.

### Advantages of Embodiment

(1) In the report generation system of the present embodiment, a measurement data item that indicated normal behavior among those collected during the report target period is excluded from the prompt. This reduces the computational load on the large language model.
(2) In the report generation system of the present embodiment, the report target data item corresponding to the measurement data item that indicated abnormal behavior during the report target period and indicated normal behavior during the reference period, which precedes the report target period, is used for a prompt. Thus, for the measurement data item for a tag that indicated normal behavior prior to the report target period but began to indicate abnormal behavior during the report target period, a description is generated by the large language model. Even if the measurement data item indicated abnormal behavior during the report target period, the measurement data item that has continuously indicated the abnormal behavior since before the report target period is excluded from the prompt. The measurement data item that began to indicate abnormal behavior during the report target period has a relatively high priority for inclusion in a report because the possibility that the report recipient recognizes the abnormality is relatively low. The measurement data item that has continuously indicated abnormal behavior from the past has a relatively low priority for inclusion in a report because there is a relatively high possibility that the report recipient has already recognized the abnormality (e.g., the report recipient has already been notified of the abnormality). In the manner described above, among the measurement data items that indicated an abnormality during the report target period, only the one having a tag that indicates a relatively high priority for inclusion in a report is included in the prompt. This reduces the computational load on the large language model while retaining the necessary information for a report.
(3) In addition to the report target data item, the prompt generation unit 21E is configured to generate a prompt that includes a reference data item corresponding to a measurement data item collected during the reference period and assigned a tag matching a new abnormality. Such a configuration allows the large language model to produce a description comparing the measurement data item collected during the reference period and the measurement data item collected during the report target period.
(4) The reference data item included in a prompt may be a reference statistical value related to measurement data items collected at different points in time during the reference period and assigned the same tag matching a new abnormality tag. This reduces the number of characters (i.e., the number of tokens) included in the prompt while enabling comparison between the measurement data item collected during the reference period and the measurement data item collected during the report target period.
(5) The report target data item included in a prompt may be a report target statistical value related to measurement data items collected at different points in time during the report target period and assigned the same tag matching a new abnormality tag. Calculating a reference statistical value from a relatively large number of measurement data items suitably reduces the number of characters included in the prompt, while enabling comparison between the measurement data item collected during the reference period and the measurement data item collected during the report target period. Calculating a report target statistical value from a relatively small number of measurement data items reduces the number of characters included in the prompt, while preventing the behavior reflected in the measurement data collected during the report target period from becoming difficult to observe.
(6) In step S8, the report generation unit 21G may output, to a report, information reporting that the measurement data item assigned the tag matching the continuous abnormality tag has continuously indicated abnormal behavior from the reference period to the report target period. While the measurement data item that has continuously indicated abnormal behavior from the reference period has a relatively low priority for inclusion in a report, it is preferred for such a measurement data item that the report recipient is notified that the abnormality that occurred in the past has continued. Outputting the above-described information to a report allows the report recipient to be notified that an abnormality has continued in a tag in which the abnormality occurred in the past, without using a large language model.
(7) The operating state determination unit 21B executes the operating state determination process of step S3 prior to the abnormality determination process executed in step S4. In the report generation system of the present embodiment, only when the processing system 11 is in the operating state, the process that generates the first report using the large language model is executed. That is, when the processing system 11 is in the non-operating state, the process that generates the first report using the large language model is not executed.
   For example, when the processing system 11 is in the non-operating state, a relatively large number of measurement data items are likely to be determined to have abnormal behavior. Accordingly, a relatively large number of measurement data items may be recognized as report target data items. This will likely to increase the calculation load on the large language model. In this regard, the calculation load on the large language model is reduced by executing the process that generates the first report using the large language model only when the processing system 11 is in the operating state. When the processing system 11 is in the non-operating state, the second report is output to report that state. This allows the report recipient to be notified that the first report using the large language model was not output because the processing system 11 was in the non-operating state.
(8) The report generation system includes the measurement data item storage unit 22A, which stores a measurement data item and the tag assigned to the measurement data item in association with each other. This configuration allows the processor 21 to execute a process that generates a report using the measurement data item stored in the measurement data item storage unit 22A.

### Modifications

The present embodiment may be modified as follows. The present embodiment and the following modifications can be combined if the combined modifications remain technically consistent with each other.

The process of step S9 may be omitted. That is, even when the processing system 11 is in the non-operating state during the report target period, the process that outputs a second report may be omitted.

The process in which the operating state determination unit 21B determines in step S3 whether the processing system 11 is in the operating state or the non-operating state during the report target period may be omitted. In this case, regardless of the state of the processing system 11, the report generation system executes the processes of steps S4 to S8.

The process of step S8 in which the report generation unit 21G includes, in a first report, information reporting that the tag determined to match a continuous abnormality tag is a tag in which an abnormality has continuously occurred may be omitted.

The process of step S5 may be modified as follows. The abnormality tag classification unit 21D may read, from the abnormality determination result storage unit 22D, the result of determination made by the abnormality tag identification unit 21C for the measurement data item assigned the tag matching an abnormality tag and collected during the reference period. In this case, the abnormality tag classification unit 21D may classify the tags matching the abnormality tags into a new abnormality tag and a continuous abnormality tag, based on the result of the determination made by the abnormality tag identification unit 21C and read from the abnormality determination result storage unit 22D.

The number of measurement data items used to calculate a report target statistical value is not particularly limited. For example, the number of measurement data items used to calculate a report target statistical value may be greater than or equal to the number of measurement data items used to calculate a reference statistical value.

The report target data item included in a prompt generated by the prompt generation unit 21E only needs to include at least one of the measurement data item collected during the report target period and its report target statistical value. When the prompt includes the reference data item, the reference data item only needs to include at least one of the measurement data item collected during the reference period and its reference statistical value. Further, the prompt generated by the prompt generation unit 21E does not have to include the reference data item.

The abnormality tag classification unit 21D may use a large language model to determine whether a tag matching an abnormality tag is a new abnormality tag or a continuous abnormality tag. For example, the abnormality tag classification unit 21D inputs, into the large language model, a prompt including the measurement data item collected during the reference period and assigned a tag matching the abnormality tag and including an instruction to determine whether the tag for that measurement data item is a new abnormality tag or a continuous abnormality tag. In this case, the prompt preferably includes an abnormality determination condition for determining whether the measurement data item included in the prompt indicates normal behavior or abnormal behavior. The abnormality determination condition may be a threshold stored in the abnormality determination condition storage unit 22C. The prompt may include a measurement data item collected during the report target period and assigned a tag matching the abnormality tag. In this case, the measurement data item collected during the report target period indicates abnormal behavior. Thus, it is determined whether the measurement data item collected during the reference period indicates normal behavior or abnormal behavior by comparing the measurement data item collected during the reference period with the measurement data item collected during the report target period.

The operating state determination unit 21B may use a large language model to determine whether the processing system 11 is in the operating state or in the non-operating state. For example, the operating state determination unit 21B inputs, into a large language model, a prompt including at least one measurement data item collected during the report target period and assigned a specific tag and including an instruction to determine whether the processing system 11 is in the operating state or the non-operating state. In this case, the prompt may include a design value (theoretical value) of the measurement data item assigned a specific tag. This allows the large language model to determine whether the measurement data item indicates normal or abnormal behavior according to the ratio of the measurement data item to the design value. For example, as the ratio of the measurement data item to the design value approaches 100%, the possibility that the processing system 11 is in the operating state becomes higher.

In the report generation system, the measurement data item storage unit 22A included in the storage unit 22 of the report generation server 20 may be omitted. In this case, the processor 21 may be configured to acquire a measurement data item from the management device 13 each time the processor 21 executes the report generation process.

The report generation unit 21G may generate a first report using a large language model, instead of using the template stored in the report storage unit 22F. In this case, the report generation unit 21G acquires the first report from the large language model by inputting, into the large language model, a prompt including a description of a report target data item and an instruction to generate the first report using the description.

The process of step S5, in which the abnormality tag classification unit 21D classifies the tags matching abnormality tags into a new abnormality tag and a continuous abnormality tag according to the behavior reflected in the measurement data item collected during the reference period, may be omitted. In this case, in step S6, the prompt generation unit 21E includes, in the prompt, as a report target data item, the data item matching the measurement data item collected during the report target period and assigned a tag corresponding to an abnormality tag. In this case, the report target data item may include one or more measurement data items collected during the report target period and assigned a tag matching the abnormality tag. In this case, the report target data item may further include a report target statistical value related to measurement data items collected at different points in time during the report target period and assigned the same tag matching the abnormality tag. Even in such a configuration, the measurement data item that indicated normal behavior among those collected during the report target period is excluded from the prompt. This reduces the computational load on the large language model.

The report generation system may be implemented as a single device or may be distributed across multiple devices or subsystems that run together to execute programs. In the report generation system, the report generation server 20 and other devices may be implemented as a single device. In the report generation system, at least part of the configuration of the report generation server 20 may be executed by a cloud server. For example, at least part of the units exemplified as the database included in the storage unit 22 of the report generation server 20 may be replaced with a database on a cloud server.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A report generation system that generates a report on an operating status of a processing system (11) via a large language model, wherein
the processing system (11) includes sensors (12A) that monitor the operating status, wherein each of multiple measurement data items corresponding to measurement values collected by the sensors (12A) is assigned a tag unique to the sensor (12A) that collects the measurement data item, and
the report generation system comprises a processor (21) configured to:
identify, as an abnormality tag, a tag for a measurement data item that indicated abnormal behavior during a report target period among the measurement data items;
generate a prompt including a report target data item and an instruction to generate a description of a behavior reflected in the report target data item, wherein the report target data item corresponds to a measurement data item acquired during the report target period and assigned a tag matching the abnormality tag;
acquire the description from the large language model by inputting the prompt into the large language model; and
generate the report using the description.

2. The report generation system according to claim 1, wherein
a period that precedes the report target period and is continuous with the report target period is a reference period,
the processor (21) is further configured to identify, as a new abnormality tag, a tag for a measurement data item that indicated normal behavior during the reference period among the measurement data items assigned the tag matching the abnormality tag, and
the report target data item is the measurement data item assigned the tag matching the new abnormality tag.

3. The report generation system according to claim 2, wherein
the prompt further includes a reference data item, wherein the reference data item corresponds to a measurement data item collected during the reference period and assigned a tag matching the new abnormality tag.

4. The report generation system according to claim 3, wherein
the reference data item includes a reference statistical value, wherein the reference statistical value is related to measurement data items collected at different points in time during the reference period and assigned the same tag matching the new abnormality tag.

5. The report generation system according to claim 4, wherein
the report target data item includes a report target statistical value,
wherein the report target statistical value is related to measurement data items collected at different points in time during the report target period and assigned the same tag matching the new abnormality tag, and
the report target statistical value is calculated from a smaller number of measurement data items than the number of measurement data items used to calculate the reference statistical value.

6. The report generation system according to any one of claims 2 to 5, wherein
the processor (21) is further configured to:
identify, as a continuous abnormality tag, a tag for a measurement data item that indicated abnormal behavior during the reference period among the measurement data items assigned the tag matching the abnormality tag, and
output, to the report, information reporting that the measurement data item assigned the tag matching the continuous abnormality tag has continuously indicated abnormal behavior from the reference period to the report target period.

7. The report generation system according to any one of claims 1 to 5, wherein
the processor (21) is further configured to:
prior to the process that identifies the abnormality tag, determine whether the processing system (11) is in an operating state or a non-operating state during the report target period based on a measurement data item collected during the report target period and assigned a specific tag;
when the processing system (11) is in the operating state, execute operations from the process that identifies the abnormality tag to a process that outputs the report; and
when the processing system (11) is in the non-operating state, not execute the operations from the process that identifies the abnormality tag to the process that outputs the report.

8. The report generation system according to claim 7, wherein
the report based on the description is a first report,
a report including information reporting that the processing system (11) is in the non-operating state is a second report, and
the processor (21) is further configured to execute, when the processing system (11) is in the non-operating state, a process that outputs the second report without executing operations from the process that identifies the abnormality tag to a process that outputs the first report.

9. The report generation system according to any one of claims 1 to 5, further comprising a database (22A) that stores the measurement data items and the tags respectively assigned to the measurement data items in association with each other.

10. A report generation method for generating a report on an operating status of a processing system (11) via a large language model using a report generation system that includes a processor (21), wherein
the processing system (11) includes sensors (12A) that monitor the operating status, wherein each of multiple measurement data items corresponding to measurement values collected by the sensors (12A) is assigned a tag unique to the sensor (12A) that collects the measurement data item, and
the report generation method comprises:
identifying, by the processor (21), as an abnormality tag, a tag for a measurement data item that indicated abnormal behavior during a report target period among the measurement data items;
generating, by the processor (21), a prompt including a report target data item and an instruction to generate a description of a behavior reflected in the report target data item, wherein the report target data item corresponds to a measurement data item acquired during the report target period and assigned a tag matching the abnormality tag;
acquiring, by the processor (21), the description from the large language model by inputting the prompt into the large language model; and
generating, by the processor (21), the report using the description.

11. A program executed by a processor (21) included in a report generation system, the program causing the processor (21) to execute the report generation method according to claim 10.
